# EUROPEAN PATENT APPLICATION

(11) **EP 4 632 914 A1**
(43) Date of publication of application: **15.10.2025**
(21) Application number: 23900334.6
(22) Date of filing: 24.10.2023
(51) Int. Cl.: H01M 50/342, H01M 10/613, H01M 10/643, H01M 10/6567, H01M 50/204, H01M 50/213, H01M 50/30

(54) **BATTERY PACK**

(30) Priority: 07.12.2022 JP 2022195584
(71) Applicant: Panasonic Intellectual Property Management Co., Ltd., Kadoma-shi, Osaka 571-0057 (JP)
(72) Inventor: KURAMITSU Kazuki, Kadoma-shi, Osaka 571-0057 (JP)
(74) Representative: Eisenführ Speiser
(86) International application number: PCT/JP2023/038404
(87) International publication number: WO 2024/122212

(57) **Abstract**

A battery pack includes: a plurality of batteries each of which includes a safety valve that opens in response to an increase in an internal pressure of the battery; and a case in which the plurality of batteries are housed. The case includes: a battery housing chamber in which the plurality of batteries are housed and an insulating cooling liquid is stored; an exhaust chamber into which gas exhausted from the safety valve flows and which is separated from the battery housing chamber; a first exhaust portion through which gas in the battery housing chamber is exhausted to an outside of the case; and a second exhaust portion through which the gas in the exhaust chamber is exhausted to the outside of the case.

## Description

### TECHNICAL FIELD

The present disclosure relates to a battery pack in which a plurality of batteries are housed.

### BACKGROUND ART

Secondary batteries, such as lithium-ion batteries, are used in the form of a battery pack in which a plurality of batteries are electrically connected to each other and housed in a case. Patent Literature (PTL) 1 discloses a battery pack in which batteries are housed in the space filled with cooling liquid to cool the batteries.

### Citation List

### Patent Literature

[PTL 1] Japanese Unexamined Patent Application Publication No. 2014-60088

### SUMMARY OF THE INVENTION

When an abnormality occurs in a battery in the battery pack, heat is generated inside the battery, causing the surface of the outer body of the battery to increase in temperature. As the abnormality further progresses, high-temperature gas is eventually generated in the battery. In the battery pack disclosed in PTL 1, the cooling liquid comes into direct contact with the high-temperature battery surface in the event of an abnormal heat generation of a battery. As a result, the cooling liquid may thermally decompose and generate a large amount of gas. Depending on the type of the cooling liquid, such gas may be toxic or harmful. It is environmentally undesirable for such gas to be discharged out of the case irregularly through cracks generated by damage and the like of the battery. In addition, depending on the type of the cooling liquid, the gas may be flammable. There is a demand to inhibit the mixing of such gas with the high-temperature gas generated inside the battery.

In a battery pack according to one aspect of the present disclosure, a plurality of batteries are housed in a case. Each of the plurality of batteries includes a safety valve that opens in response to an increase in an internal pressure of the battery. The case includes: a battery housing chamber in which the plurality of batteries are housed and an insulating cooling liquid is stored; an exhaust chamber into which gas exhausted from the safety valve flows and which is separated from the battery housing chamber; a first exhaust portion through which the gas in the battery housing chamber is exhausted to an outside of the case; and a second exhaust portion through which the gas in the exhaust chamber is exhausted to the outside of the case.

### ADVANTAGEOUS EFFECTS OF INVENTION

The battery pack according to one aspect of the present disclosure is capable of controlling the exhaust direction of the gas generated from the cooling liquid in the event of an abnormal heat generation of a battery, and preventing the gas generated from the cooling liquid from mixing with the gas generated inside the battery.

### BRIEF DESCRIPTION OF THE DRAWINGS

[FIG. 1] FIG. 1 is a perspective view of a battery pack that is an example of an embodiment.
[FIG. 2] FIG 2 is a plan cross-sectional view taken along line A-A in FIG. 1.
[FIG. 3] FIG. 3 is a cross-sectional view of a battery that is an example of the embodiment.

### DESCRIPTION OF EMBODIMENT

An exemplary embodiment according to the present disclosure will be described in detail below with reference to the attached drawings. The drawings include some schematic views, and the dimensional relationships in the depth, width, and height of components between the individual drawings are not always the same. Among the structural elements described below, structural elements other than those recited in an independent claim representing the most generic concept are optional and non-essential structural elements.

In the embodiment described below, an example will be described in which battery pack 1 has an approximately cuboid outer shape. In the description of the drawings, the X-direction represents the depth direction of battery pack 1 (case 10), the Y-direction represents the width direction of battery pack 1 (case 10), and the Z-direction represents the height direction of battery pack 1 (case 10). The X-direction, Y-direction, and Z-direction are orthogonal to each other. In the Z-direction, the side on which cap 45 of battery 30 is provided is defined as the "upper" side, and the opposite side is defined as the "lower" side.

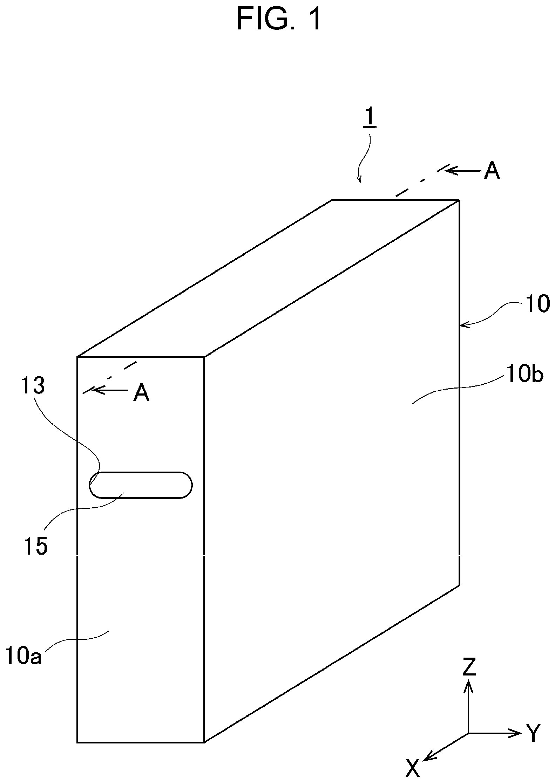

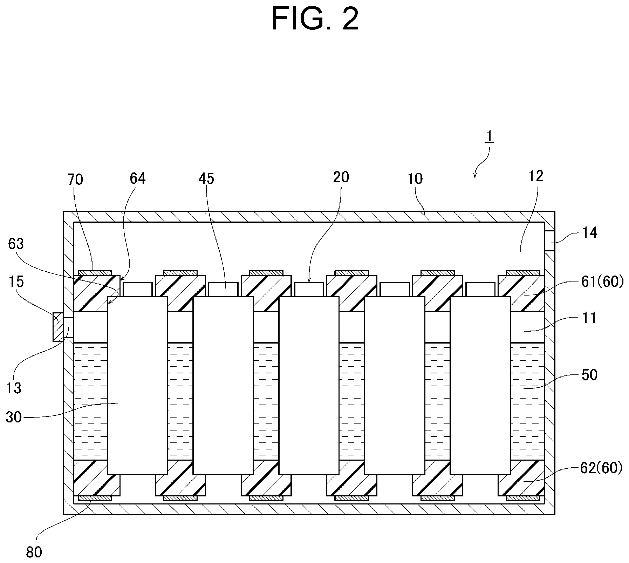

First, with reference to FIG. 1 and FIG. 2, an outline of battery pack 1 will be described. FIG. 1 is a perspective view of battery pack 1 that is an example of an embodiment. FIG. 2 is a cross-sectional view taken along line A-A in FIG. 1 (a cross-sectional view taken along XZ-plane passing through the center of battery pack 1 in the width direction).

Battery pack 1 includes battery block 20 in which a plurality of batteries 30 are housed and case 10 in which battery block 20 is housed. Insulating cooling liquid 50 is stored in case 10. Each battery 30 is partially immersed in cooling liquid 50. Each battery 30 is, for example, a non-aqueous electrolyte secondary battery, such as a lithium-ion battery. Although there is no particular limitation on shape, size, and the like, a cylindrical battery is suitable for battery 30. The case in which each battery 30 is a cylindrical battery will be mainly described below.

Battery pack 1 is used mainly as a power source for producing power. Battery pack 1 is used, for example, as a power source for motor-driven electric devices such as electric automobiles, power tools, power-assisted bicycles, electric motorcycles, electric wheelchairs, electric tricycles, and electric carts. The applications of battery pack 1 are not limited, and may be used as a power source for a variety of electrical devices other than motor-driven devices, such as cleaners, radios, lighting devices, digital cameras, and video cameras used indoors and outdoors.

Battery block 20 includes a plurality of batteries 30 and holder 60 into which both end portions of batteries 30 in the Z-direction are inserted and which holds batteries 30. Battery block 20 is disposed inside case 10, in the portion from the lower side to the middle portion of case 10 in the Z-direction. As a result, exhaust chamber 12 to be described later in detail is formed in the upper portion in case 10.

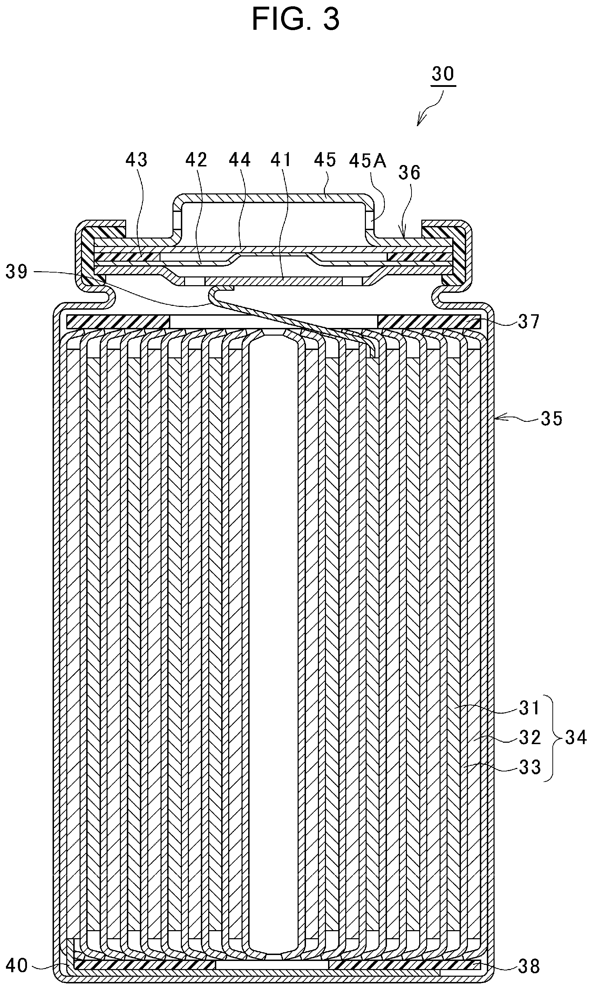

Each battery 30 includes a safety valve that opens in response to an increase in internal pressure of battery 30. As described in detail below, in the present embodiment, battery 30 includes a safety valve on the upper side of battery 30. When the internal pressure of battery 30 increases in the event of an abnormal heat generation of battery 30, gas is exhausted from exhaust hole 45A (see FIG. 3) of cap 45.

Holder 60 includes first holder 61 that holds the upper side of each battery 30 and second holder 62 that holds the lower side of each battery 30. First holder 61 includes housing portions 63 that house batteries 30 and openings 64 that expose caps 45 of batteries 30. Cap 45 forms the safety valve of battery 30. By forming opening 64, cap 45 can be connected to exhaust chamber 12.

Case 10 will be described with reference to FIG. 1 and FIG. 2.

Case 10 is made of metal, such as aluminum, and has an approximately cuboid outer shape. Specifically, case 10 includes two first lateral walls 10a at both ends in the lengthwise direction of case 10 and two second lateral walls 10b at both ends in the widthwise direction of case 10. In other words, two first lateral walls 10a are opposite to each other and two second lateral walls 10b are opposite to each other. Case 10 is not limited to metal, but may be made of resin. The shape of case 10 is not limited to an approximately cuboid shape. Case 10 functions to protect batteries 30 housed inside case 10 from dust and water.

As illustrated in FIG. 2, battery housing chamber 11 in which batteries 30 are housed is disposed in case 10. Battery housing chamber 11 is defined by case 10, first holder 61, and second holder 62. Cooling liquid 50 is stored in battery housing chamber 11. Each battery 30 is partially immersed in cooling liquid 50. From the viewpoint of efficiently cooling batteries 30, it is preferable that cooling liquid 50 occupies at least half of the volume of battery housing chamber 11. Cooling liquid 50 may entirely fill battery housing chamber 11.

Cooling liquid 50 has insulating properties. This prevents current leakage of batteries 30 via cooling liquid 50. Examples of cooling liquid 50 include an insulating oil, a transformer oil, a silicone oil, a fluorine-based inert liquid such as hydrofluoroether.

As illustrated in FIG. 2, exhaust chamber 12 into which gas exhausted from the safety valve of battery 30 flows is disposed in case 10. Exhaust chamber 12 is disposed between the top plate of case 10 and first holder 61, and is separated from battery housing chamber 11. Cap 45, which forms the safety valve, is connected to exhaust chamber 12. As described in detail below, when the internal pressure of battery 30 increases in the event of an abnormal heat generation of battery 30, the gas generated inside battery 30 is exhausted from exhaust hole 45A (see FIG. 3) of cap 45. This causes the gas exhausted from the safety valve to flow into exhaust chamber 12.

It is preferable that exhaust chamber 12 has an airtight structure. This prevents the gas exhausted from the safety valve from flowing into battery housing chamber 11 when the gas flows into exhaust chamber 12. As a result, it is possible to prevent batteries 30 in battery housing chamber 11 from being exposed to the gas, and prevents the gas exhausted from the safety valve from mixing with flammable gas generated from cooling liquid 50 in battery housing chamber 11.

Case 10 includes first exhaust portion 13 that exhausts the gas inside battery housing chamber 11 to the outside of case 10 and second exhaust portion 14 that exhausts the gas inside exhaust chamber 12 to the outside of case 10. As a result, the gas generated from cooling liquid 50 in the event of an abnormal heat generation of battery 30 is exhausted from first exhaust portion 13 to the outside of case 10. Moreover, the gas exhausted from the safety valve of battery 30 in the event of an abnormal heat generation of battery 30 is exhausted from second exhaust portion 14 to the outside of case 10. First exhaust portion 13 is connected only to battery housing chamber 11, and second exhaust portion 14 is connected only to exhaust chamber 12.

First exhaust portion 13 and second exhaust portion 14 are preferably provided in different lateral walls of case 10. For example, first exhaust portion 13 and second exhaust portion 14 can be provided in two first lateral walls 10a, which are separated at both ends of case 10 in the lengthwise direction, or two second lateral walls 10b, which are separated at both ends of case 10 in the widthwise direction, among a plurality of lateral walls of case 10. In the example illustrated in the drawings, first exhaust portion 13 is provided in one of two first lateral walls 10a and second exhaust portion 14 is provided in the other one of two first lateral walls 10a. This prevents the gases exhausted from the respective exhaust portions from mixing. The number of first exhaust portions 13 and the number of second exhaust portions 14 are not particularly limited, and may be plural. For example, one lateral wall of case 10 may include a plurality of first exhaust portions 13 or a plurality of second exhaust portions 14.

First exhaust portion 13 is preferably provided in the lateral wall of case 10, at an upper portion of battery housing chamber 11. This prevents cooling liquid 50 stored in battery housing chamber 11 from leaking out of case 10.

The sizes of first exhaust portion 13 and second exhaust portion 14 are not particularly limited as long as they are large enough to exhaust the gas inside case 10 and prevent case 10 from being destroyed. First exhaust portion 13 and second exhaust portion 14 may be open at all times, but preferably have the function to deform and open in response to an increase in the internal pressure of case 10 in the event of an abnormality. This prevents case 10 from being destroyed, while preventing dust and water from entering case 10.

In the present embodiment, each of first exhaust portion 13 and second exhaust portion 14 includes a slit. By including the slit, the slit portion preferentially deforms in response to an increase in the internal pressure of case 10 in the event of an abnormality. With this, when the gas is exhausted from cooling liquid 50 or the safety valve, the internal pressure of case 10 increases. When first exhaust portion 13 or second exhaust portion 14 is pushed from inside case 10, the slit portion is opened and the gas is exhausted to the outside of case 10. The term "slit" refers to a through hole in a thin line shape that penetrates in thickness direction of each exhaust portion.

First exhaust portion 13 preferably includes gas treatment unit 15 that purifies the gas. Gas treatment unit 15 can be selected according to the toxicity and harmfulness of the gas generated from cooling liquid 50, and is, for example, a gas filter, a neutralizer, and an absorber. Gas treatment unit 15 allows less toxic or less harmful gas to be exhausted to the outside of case 10. Gas treatment unit 15 is fixed to case 10 so as to block first exhaust portion 13, for example, by fixing means such as an adhesive.

Next, with reference to FIG. 2, battery block 20 will be described. As described above, battery block 20 includes the plurality of batteries 30 and holder 60 into which both axial ends of the plurality of batteries 30 are inserted and which holds batteries 30. Holder 60 includes first holder 61 that holds one side of each battery 30 in the Z-direction and second holder 62 that holds the other side of each battery 30 in the Z-direction.

Battery block 20 includes positive electrode terminal plates 70 that abut with the upper surface of first holder 61 and negative electrode terminal plates 80 that abut with the lower surface of second holder 62. Positive electrode terminal plate 70 is electrically connected to cap 45 serving as a positive electrode external terminal of battery 30 via a positive electrode lead portion (not illustrated). Negative electrode terminal plate 80 is electrically connected to the bottom of outer body 35 (see FIG. 3) serving as a negative electrode external terminal of battery 30 via a negative electrode lead portion (not illustrated). Positive electrode terminal plates 70 and negative electrode terminal plates 80 connect the plurality of batteries 30 in parallel.

Next, holder 60 will be described with reference to FIG. 2. Holder 60 may be made of, for example, a high thermal conductivity PPS (polyphenylene sulfide) resin, a resin containing a heat dissipating filler, or an injection moldable thermosetting resin. More specifically, holder 60 may be made of phenolic resin, unsaturated polyester, or unsaturated polyester mixed with a heat-absorbing agent. Holder 60 may be made of an inorganic mineral such as mica, or a resin material mixed with an inorganic mineral such as mica.

First holder 61 includes housing portions 63 that house batteries 30 and openings 64 that expose caps 45 forming the safety valves of batteries 30. Housing portions 63 are disposed on the lower surface of first holder 61. Each housing portion 63 is circular in shape when viewed from the lower side in the Z-direction and is recessed when viewed from the X or Y direction. The upper side of battery 30 is held by housing portion 63 by the upper end portion of battery 30 being fitted in housing portion 63.

Opening 64 penetrates through housing portion 63. More specifically, opening 64 is a circular hole having a diameter smaller than the circular diameter of housing portion 63 when viewed from the lower side in the Z direction. When viewed from the lower side in the Z direction, the center of housing portion 63 coincides with the center of opening 64. Opening 64 allows cap 45 as the positive electrode external terminal of battery 30 to be exposed and cap 45 and the positive electrode lead portion to be connected. Moreover, opening 64 allows the gas exhausted from the safety valve of battery 30 to flow into exhaust chamber 12 in the event of an abnormal heat generation of battery 30.

Next, battery 30 will be described with reference to FIG. 3. Battery 30 is a cylindrical battery, and is a lithium-ion battery. Battery 30 is not limited to a cylindrical battery, but may be a prismatic battery, a laminated battery, or the like. Battery 30 may be an aqueous battery or a non-aqueous battery. A lithium-ion battery is preferably used as an example of the non-aqueous battery.

Battery 30 includes electrode body 34, electrolyte (not illustrated), and outer body 35 that houses electrode body 34 and the electrolyte. Electrode body 34 includes positive electrode 31, negative electrode 32, and separator 33. Electrode body 34 has a wound structure in which positive electrode 31 and negative electrode 32 are wound spirally via separator 33. Outer body 35 has a bottomed cylindrical shape in which the upper side is open. The opening of outer body 35 is blocked by sealing body 36.

Battery 30 includes insulating plates 37 and 38 disposed on the upper side and the lower side of electrode body 34, respectively. In the example illustrated in FIG. 3, positive electrode lead 39 attached to positive electrode 31 extends toward sealing body 36 through a through-hole of insulating plate 37, and negative electrode lead 40 attached to negative electrode 32 extends toward the bottom of outer body 35 through the outside of insulating plate 38. Positive electrode lead 39 is connected, by welding or the like, to the lower surface of internal terminal plate 41 that serves as the bottom plate of sealing body 36. Cap 45 which serves as the top plate of sealing body 36 electrically connected to internal terminal plate 41 serves as the positive electrode external terminal. Negative electrode lead 40 is connected to the inner surface of the bottom of outer body 35 by welding or the like, and the bottom of outer body 35 serves as the negative electrode external terminal.

Sealing body 36 has a stacked structure in which, in order from the electrode body 34 side, internal terminal plate 41, valve body 42, insulating member 43, upper valve body 44, and cap 45 are stacked. Each of the components of sealing body 36 has a disk or ring shape, for example, and the components excluding insulating member 43 are electrically connected to each other. The central portion of lower valve body 42 and the central portion of upper valve body 44 are connected to each other, and insulating member 43 is interposed between the peripheral portions of lower valve body 42 and upper valve body 44.

In the present embodiment, lower valve body 42, upper valve body 44, and cap 45 form the safety valve of sealing body 36. When the internal pressure of battery 30 increases in the event of an abnormal heat generation of battery 30, lower valve body 42 deforms to push upper valve body 44 up toward cap 45 and breaks. This blocks the current path between lower valve body 42 and upper valve body 44. As the internal pressure further increases, upper valve body 44 breaks, so that the gas is exhausted through exhaust hole 45A provided in the lateral surface of the protrusion of cap 45. The position at which the safety valve is provided is not limited to the present embodiment. It may be that the safety valve is provided at the bottom of outer body 35 that is the lower side of battery 30 so that the internal gas is exhausted when the internal pressure of battery 30 increases. In that case, the bottom of outer body 35 is connected to exhaust chamber 12 (see FIG. 2).

As described above, battery pack 1 according to the present embodiment includes the plurality of batteries 30 housed in case 10. Each of the plurality of batteries 30 incudes a safety valve that opens in response to an increase in the internal pressure of battery 30. Case 10 includes: battery housing chamber 11 in which the plurality of batteries 30 are housed and insulating cooling liquid 50 is stored; and exhaust chamber 12 into which gas exhausted from the safety valve flows and which is separated from battery housing chamber 11. Case 10 includes first exhaust portion 13 that exhausts the gas inside battery housing chamber 11 to the outside of case 10 and second exhaust portion 14 that exhausts the gas inside exhaust chamber 12 to the outside of case 10.

With the configuration, in the event of an abnormal heat generation of battery 30, cooling liquid 50 stored in battery housing chamber 11 comes into contact with the surface of high-temperature battery 30. As a result, when gas is generated from cooling liquid 50 due to thermal decomposition or the like, the gas is exhausted through first exhaust portion 13 to the outside of case 10. Moreover, when the internal pressure increases in the event of an abnormal heat generation of battery 30 and the gas generated inside battery 30 is exhausted from the safety valve, the gas flows into exhaust chamber 12 and is exhausted out of case 10 through second exhaust portion 14. This allows the exhaust direction of the gas generated from cooling liquid 50 to be controlled, and also prevents the gas generated from cooling liquid 50 from mixing with the gas generated inside battery 30.

Moreover, the present disclosure is not limited to the embodiment described above. Various modifications or alterations may be made to the exemplary embodiment within the scope of the present disclosure as defined by the appended claims of the present application or their equivalents.

In the present embodiment, battery housing chamber 11 and exhaust chamber 12 are divided by holder 60. However, the present disclosure is not limited to such an example. For example, it may be that a dividing wall is disposed in case 10 to divide battery housing chamber 11 and exhaust chamber 12. Moreover, case 10 may include a space other than battery housing chamber 11 and exhaust chamber 12.

Moreover, in the present embodiment, each of first exhaust portion 13 and second exhaust portion 14 includes a slit. However, the forms of first exhaust portion 13 and second exhaust portion 14 are not limited to such an example. For example, it may be that each of first exhaust portion 13 and second exhaust portion 14 has a thickness less than the thickness of the other portions of case 10. Moreover, for example, first exhaust portion 13 and second exhaust portion 14 may be C-shaped or ring shaped thin portions in lateral walls of case 10. With this, each of first exhaust portion 13 and second exhaust portion 14 has a function of deforming or breaking open in response to an increase in the internal pressure of case 10 in the event of an abnormality of battery 30.

Case 10 may include covering members that cover first exhaust portion 13 and second exhaust portion 14. This further prevents dust and water from entering case 10. The covering members are fixed to the outer surface or inner surface of case 10 to block first exhaust portion 13 and second exhaust portion 14, for example, by means of fixing means such as an adhesive. The covering members may be made of, for example, a breathable and waterproof material such as Gore-Tex (registered trademark) which allows the exhaust gas from inside case 10 to pass through and blocks liquid such as water from the outside.

Moreover, in the present embodiment, positive electrode terminal plates 70 for electrically connecting the positive electrode external terminals of the plurality of batteries 30 and negative electrode terminal plates 80 for electrically connecting the bottom of outer body 35 (see FIG. 3) as the negative electrode external terminals of the plurality of batteries 30 are provided outside relative to the both ends of battery 30 in the up-down direction and are opposed to each other in the up-down direction of battery 30. However, the present disclosure is not limited to such an example. For example, both of positive electrode terminal plates 70 and negative electrode terminal plates 80 may be provided at one side of battery 30 in the up-down direction. In this case, a plate member made of an insulating material may be provided between positive electrode terminal plates 70 for electrically connecting the positive electrode external terminals of the plurality of batteries 30 and negative electrode terminal plates 80 for electrically connecting the bottom of outer body 35 (see FIG. 3) as the negative external terminals of the plurality of batteries 30 to reliably prevent the short circuit between positive electrode terminal plates 70 and negative electrode terminal plates 80.

### REFERENCE MARKS IN THE DRAWINGS

- 1: battery pack
- 10: case
- 10a: first lateral wall
- 10b: second lateral wall
- 11: battery housing chamber
- 12: exhaust chamber
- 13: first exhaust portion
- 14: second exhaust portion
- 15: gas treatment unit
- 20: battery block
- 30: battery
- 31: positive electrode
- 32: negative electrode
- 33: separator
- 34: electrode body
- 35: outer body
- 36: sealing body
- 37: insulating plate
- 38: insulating plate
- 39: positive electrode lead
- 40: negative electrode lead
- 41: internal terminal plate
- 42: lower valve body
- 43: insulating member
- 44: upper valve body
- 45: cap (positive electrode external terminal)
- 45A: exhaust hole
- 50: cooling liquid
- 60: holder
- 61: first holder
- 62: second holder
- 63: housing portion
- 64: opening
- 70: positive electrode terminal plate
- 80: negative electrode terminal plate

## Claims

1. A battery pack comprising:
a case; and
a plurality of batteries housed in the case;
wherein each of the plurality of batteries includes a safety valve that opens in response to an increase in an internal pressure of the battery, and
the case includes:
a battery housing chamber in which the plurality of batteries are housed and an insulating cooling liquid is stored;
an exhaust chamber into which gas exhausted from the safety valve flows, the exhaust chamber being separated from the battery housing chamber;
a first exhaust portion through which gas in the battery housing chamber is exhausted to an outside of the case; and
a second exhaust portion through which the gas in the exhaust chamber is exhausted to the outside of the case.

2. The battery pack according to claim 1,
wherein the case includes a plurality of lateral walls, and
the first exhaust portion and the second exhaust portion are provided in different lateral walls of the plurality of lateral walls.

3. The battery pack according to claim 1 or claim 2,
wherein the first exhaust portion includes a gas treatment unit that purifies the gas.
